# EUROPEAN PATENT APPLICATION

(11) **EP 4 718 797 A1**
(43) Date of publication of application: **01.04.2026**
(21) Application number: 24202563.3
(22) Date of filing: 25.09.2024
(51) Int. Cl.: H04L 41/046, H04L 41/0853, H04L 41/0806, H04L 41/0823, H04L 41/14, H04L 41/147, H04L 41/16, H04L 43/06

(54) **METHOD FOR HANDLING A MANAGING TASK OF A COMMUNICATION NETWORK**

(71) Applicant: NTT DOCOMO, INC., Tokyo 100-6150 (JP)
(72) Inventor: ÜSTOK, Refik Fatih, 80687 Munich (DE); KATSALIS, Konstantinos, 80687 Munich (DE); TRIAY MARQUES, Joan, 80687 Munich (DE); HATANAKA, Yoshitaka, Tokyo, 100-6150 (JP)
(74) Representative: Viering, Jentschura & Partner mbB Patent- und Rechtsanwälte

(57) **Abstract**

According to one embodiment, a method for handling a managing task of a communication network is described, comprising receiving a specification of a managing task, wherein the specification includes requirements of the managing task, determining whether the managing task can be performed by one or more instantiated managing task handling agents, in reaction to a determination that the managing task cannot be performed by the one or more instantiated managing task handling agents, determining required capabilities of one or more further managing task handling agents which, when instantiated, allow handling the managing task together with the one or more instantiated managing task handling agents, requesting an Agent Management Function to instantiate one or more further managing task handling agents having the required capabilities and handling the managing task by the one or more further instantiated managing task handling agents and the one or more instantiated managing task handling agents.

## Description

The present disclosure relates to devices and methods for handling a managing task of a communication network, in particular, for using and configuring agents for performing managing tasks of communication networks.

A communication network is a complex system comprising a high number of hardware and software components encompassing a wide range of technologies and performing complex tasks. To achieve correct and efficient operations, various managing tasks like maintenance and resource allocation are therefore required.

Intent-driven management (IDM) is an advanced approach to managing and automating system and network operations based on high-level goals described in a declarative manner called intents. Instead of manually configuring individual devices and components, operators define their desired goals and service levels, and the system processes these intent descriptions and automatically understands and decides a specific set of actions that need to be executed to fulfil the intent goals. Intents goals can be also described on per network slice or network slice subnet basis.

As an example, the document 3GPP TS 28.312, referred to as reference [1] in the following, describes Intent driven management services for mobile networks, basic concepts and components like also the Intent IoC (Information Object Class) describing the Intent according to 3GPP (Third Generation Partnership Project). The Intent IoC describing an Intent is usually processed by an Intent Handler entity.

Since based on the Intent description there is a wide variety of possible managing tasks it is difficult to provide a network component (Intent Handler) which is capable of handling all of them (i.e. selecting suitable managing actions and performing them) without investing a high amount of (possibly) unneeded resources to implement the intended functionalities and being capable to handle all possible kinds of managing tasks that may come up in the operation of the communication network.

Accordingly, methods for effectively handling a wide variate of managing tasks in a communication network are desirable. Furthermore, the networks are evolving to be open, one network should support network components from various vendors, therefore methods that enables integration and interoperability of network components from different vendors are desirable.

According to one embodiment, a method for handling a managing task of a communication network is provided, comprising:
- receiving a specification of a managing task, wherein the specification includes requirements, including goals and/or constraints, of the managing task;
- determining whether the managing task can be performed by one or more instantiated managing task handling agents;
- in reaction to a determination that the managing task cannot be performed by the one or more instantiated managing task handling agents,
   ∘ determining required capabilities of one or more further managing task handling agents which, when instantiated, allow handling the managing task together with the one or more instantiated managing task handling agents;
   ∘ requesting an Agent Management Function to instantiate one or more further managing task handling agents having the required capabilities; and
   ∘ handling the managing task by the one or more further instantiated managing task handling agents and the one or more instantiated managing task handling agents.

For example, according to various embodiments, a method for handling Intents related to communication network operations is provided, comprising:
- receiving an Intent description, wherein the Intent description includes requirements, including goals and/or constraints, of a managing activity,
- determining whether the requirements, including goals and/or constraints of managing activity, can be handled by one or more instantiated Intent Handling Agents (IHAs),
- consulting a managing function and a registry of Intent Handling Agents (IHAs) for one or more further Intent Handling Agents (IHAs) which, when registered and instantiated, allow handling the managing task,
- retrieving descriptions of the one or more further Intent Handling Agents (IHAs) from the repository, instantiating the appropriate one or more further Intent Handling Agents (IHAs) upon request or automatically and handling the managing task by the one or more further Intent Handling Agents (IHAs) and the one or more Intent Handling Agents (IHAs).
- if there is no Intent Handling Agent available that can be instantiated to handle the requirements, including goals and/or constraints of a managing task, or the available Intent Handling Agents are not capable of managing the Intent task, a new Intent Handling Agent and associated descriptors, packages and AI/ML models can be onboarded into the repository and be registered automatically from external (trusted sources).

Herein, the term Intent description is used to describe a formal specification of all expectations including requirements, goals, and constraints related to one or more management activities.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a mobile radio communication system.
- Figure 2: depicts an Intent Handler able to support dynamic Intent Handler Agent (IHA) associations.
- Figure 3: shows an intent handler comprising an AgHF (Agent Handler Function) in more detail.
- Figure 4: shows an (Intent Handler) Agent Management Function (AgMF) according to an embodiment in more detail.
- Figure 5: shows an Intent Handling Agent Package (IHAP) according to an embodiment.
- Figure 6: illustrates an Intent Handling delegation mode for a case where an Intent cannot be processed by an intent handler.
- Figure 7: depicts different deployment scenarios for the AgMF.
- Figure 8: depicts different possible deployment scenarios.
- Figure 9: depicts an embodiment where an AgMF is part of an intent handler deployed within O-RAN (Open Radio Access Network) Service Management and Orchestration (SMO).
- Figure 10: depicts an embodiment in O-RAN Architecture, where an intent handler is part of the SMO, and the AgMF is a separate entity with which the intent handler interacts through an ahf-amf interface.
- Figure 11: depicts an embodiment where the intent handler is part of the SMO and the AgMF is part of the Non-RT RIC (Non-Real Time RAN intelligent controller).
- Figure 12: depicts an embodiment where the Intent Handler is deployed as part of the O-RAN SMO but an AgMF is deployed in Near-RT RIC.
- Figure 13: illustrates how an Intent Handler including an AgMF arranged in an ETSI (European Telecommunications Standards Institute) NFV (Network Function Virtualization) architecture.
- Figure 14: shows a Sequence Diagram for Querying and Using External IHAs.
- Figure 15: shows a flow diagram illustrating a method for handling a managing task according to an embodiment.
- Figure 16: shows a flow diagram illustrating method for handling a managing task of a communication network according to another embodiment.

The following detailed description refers to the accompanying drawings that show, by way of illustration, specific details and aspects of this disclosure in which the invention may be practiced. Other aspects may be utilized, and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a method for handling a managing task of a communication network, comprising
   - receiving a specification of a managing task, wherein the specification includes requirements, including goals and/or constraints, of the managing task
   - determining whether the managing task can be performed by one or more instantiated managing task handling agents
   - in reaction to a determination that the managing task cannot be performed by the one or more instantiated managing task handling agents
      ∘ determining required capabilities of one or more further managing task handling agents which, when instantiated, allow handling the managing task together with the one or more instantiated managing task handling agents
      ∘ requesting an agent management function to instantiate one or more further managing task handling agents having the required capabilities and
      ∘ handling the managing task by the one or more further instantiated managing task handling agents and the one or more instantiated managing task handling agents.

In case of a determination that the managing task can be performed by the one or more instantiated managing task handling agents, the method may comprise handling the managing task by the one or more further instantiated managing task handling agents (i.e. no further managing task handling agents are instantiated for handling the managing task, i.e. instantiation of one or more further managing task handling agents is avoided).

Example 2 is the method of example 1, wherein the one or more instantiated managing task handling agents and/or the one or more further managing task handling agents include at least one proposal managing task handling agent configured to propose at least one managing action for handling the managing task, at least one prediction managing task handling agent configured to predict an outcome of the at least one managing action and at least one evaluation managing task handling agent configured to evaluate the predicted outcome.

Example 3 is the method of example 2, comprising determining that the managing task cannot be performed by the one or more instantiated managing task handling agents in reaction to a determination that the one or more instantiated managing task handling agents do not include any one of the at least one proposal managing task handling agent, the at least one prediction managing task handling agent and the at least one evaluation managing task handling agent.

Example 4 is the method of example 2 or 3, comprising determining one or more managing actions for handling the managing task based on the evaluation of the predicted outcome by a managing task handling function.

Example 5 is the method of any one of examples 1 to 3, wherein the one or more instantiated managing task handling agents and/or the one or more further managing task handling agents are configured to determine one or more managing actions for handling the managing task and wherein the one or more instantiated managing task handling agents and/or the one or more further managing task handling agents include at least one managing agent execution agent configured to perform the determined one or more managing actions.

Example 6 is the method of example 5, comprising determining that the managing task cannot be performed by the one or more instantiated managing task handling agents in reaction to a determination that the one or more instantiated managing task handling agents do not include the at least one execution agent.

Example 7 is the method of any one of examples 1 to 6, wherein the one or more instantiated managing task handling agents and/or the one or more further managing task handling agents include at least one monitoring agent for monitoring how the managing task is performed.

Example 8 is the method of example 7, comprising determining that the managing task cannot be performed by the one or more instantiated managing task handling agents in reaction to a determination that the one or more instantiated managing task handling agents do not include the at least one monitoring agent.

Example 9 is the method of any one of examples 1 to 8, wherein the managing task is a maintenance task, a service delivery task, a service assurance task, a network optimization task and/or an energy saving task.

Example 10 is the method of any one of examples 1 to 9, comprising maintaining, by the Agent Management Function, a registry of managing task handling agents the Agent Management Function has initiated in reaction to a request for instantiation of managing task handling agents.

Example 11 is the method of example 10, comprising receiving, by the Agent Management Function, for each of one or more additional managing task handling agents, a description of the additional managing task handling agent, and adding the description of the additional managing task handling agent to a repository which the Agent Management Function uses to instantiate the one or more further managing task handling agents.

Example 12 is the method of any one of examples 1 to 11, comprising determining, from the specification of the managing task, a set of required managing task handling agents required to handle the managing task and determining whether the managing task can be performed by the one or more instantiated managing task handling agents by comparing the set of required managing task handling agents with the one or more instantiated managing task handling agents.

Example 13 is the method of any one of examples 1 to 12, comprising determining one or more artificial intelligence models from an artificial intelligence model suitable for usage and/or needed by at least one of the one or more of instantiated managing task handling agents and/or the one or more of additional managing task handling agents for handling the managing task, retrieving a specification of the one or more artificial intelligence models, implementing the one or more artificial intelligence models and handling the managing task using the one or more artificial intelligence models.

Example 14 is the method of any one of examples 1 to 13, wherein the requirements of the managing task include a specification of managing task handling agents to be used for handling the managing task (in particular, the intent owner may specify that an external agent is needed).

Example 15 is the method of any one of examples 1 to 14, wherein the capabilities include one or more of a capability to analyse the relationship between different network components to be upgraded, a capability to determine a potential impact due to managing actions on network components, a capability to perform load predictions of network components and/or a capability to evaluate managing actions.

Example 16 is the method of any one of examples 1 to 16, comprising maintaining a knowledge base of instantiated managing task handling agents and determining whether the managing task can be performed by the one or more instantiated managing task handling agents by consulting the knowledge base for information about instantiated managing task handling agents.

Example 17 is the method of any one of examples 1 to 16, performed by a managing task handling component, wherein the method comprises receiving the specification of the managing task from another managing task handling component (e.g. not capable of handling the managing task and therefore forwarding the specification of the managing task) for re-delegation of the managing task.

Example 18 is the method of any one of examples 1 to 17, further comprising transmitting a report to a sender of the specification of a managing task, wherein the report includes the information whether one or more further instantiated managing task handling agents were instantiated to handle the managing task.

Example 19 is a communication network managing component, configured to perform the method of any one of examples 1 to 18.

It should be noted that one or more of the features of any of the examples above may be combined with any one of the other examples. In particular, the Examples described in context of the device are analogously valid for the method.

According to further embodiments, a computer program and a computer readable medium comprising instructions, which, when executed by a computer, make the computer perform the method of any one of the above Examples are provided.

In the following, various examples will be described in more detail.

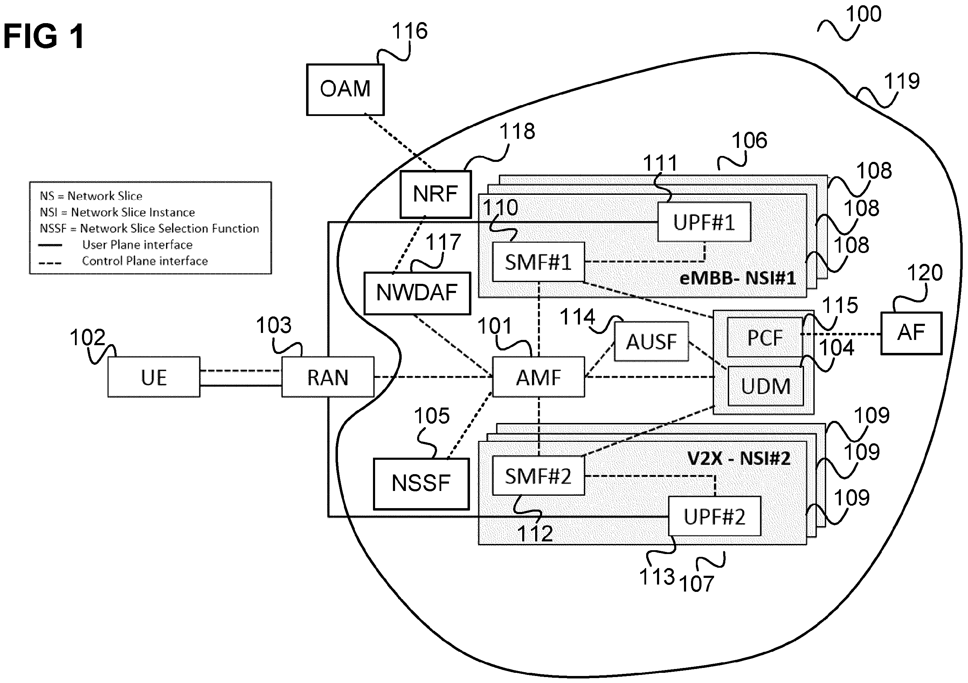

Figure 1 shows a mobile radio communication system 100, for example configured according to 5G (Fifth Generation) as specified by 3GPP (Third Generation Partnership Project).

The mobile radio communication system 100 includes a mobile radio terminal device 102 such as a UE (user equipment), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or another mobile radio communication standard (e.g. non-3GPP accesses like Wi-Fi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 119 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 119 further includes an AUSF (Authentication Server Function) 114, a PCF (Policy Control Function) 115 and an AF (application function) 120.

The core network 119 may have multiple core network slices 106, 107 and for each core network slice 106, 107, the operator (also referred to MNO for Mobile Network Operator) may create multiple core network slice instances 108, 109. For example, the core network 119 includes a first core network slice 106 with three core network slice instances (C-NSIs) 108 for providing Enhanced Mobile Broadband (eMBB) and a second core network slice 107 with three core network slice instances (NSIs) 109 for providing Vehicle-to-Everything (V2X).

Typically, when a core network slice is deployed (i.e. created), network functions (NFs) are instantiated, or (if already instantiated) referenced to form a core network slice instance and network functions that belong to a core network slice instance are configured with a core network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

The RAN 103 and the core network 119 form the network side of the mobile radio communication system, or, in other words, form the mobile radio communication network. The mobile radio communication network and the mobile terminals accessing the mobile radio communication network form, together, the mobile radio communication system.

Like the core network 119, the RAN 103 may also be sliced, i.e. include multiple RAN slices. A RAN slice and a core network slice 106, 107 may be grouped to form a network slice.

In the following, "network slice" (or just "slice") generally refers to a core network slice but may also include a RAN slice or even a transport network slice.

The mobile radio communication system 100 may further include an OAM (Operation, Administration and Maintenance) function (or entity) 116, e.g. implemented by one or more OAM servers which is connected to the RAN 103 and the core network 119 (connections are not shown for simplicity). The OAM 116 may include an MDAS (Management Data Analytics Service). The MDAS may for example provide an analytics report regarding network slice instance load. Various factors may impact the network slice instance load, e.g. number of UEs accessing the network, number of QoS flows, the resource utilizations of different NFs which are related with the network slice instance.

Further, the core network 118 includes an NRF (Network Repository Function).

The core network 119 may further include a Network Data Analytics Function (NWDAF) 117. The NWDAF is responsible for providing network analytics and/or prediction information upon request from network functions.

For a communication system like the one illustrated in figure 1, there are many management and control tasks to consider. One approach to handle these is intent-based (network) management, see reference [1].

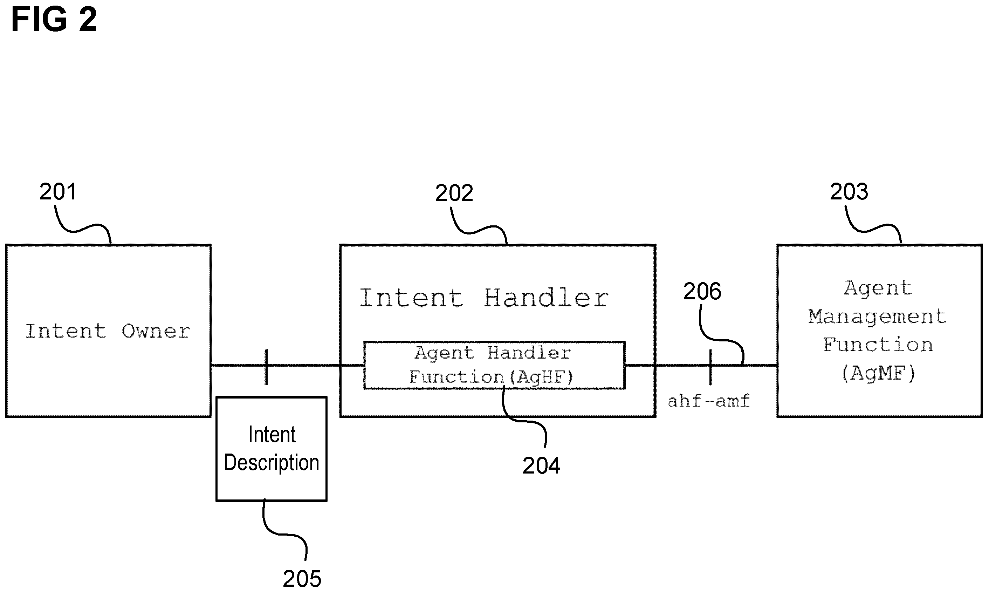

Figure 2 depicts an Intent Handler 202 able to support dynamic Intent Handler Agent (IHA) associations (i.e., which IHAs are used by the Intent Handler 202). Although predetermined associations of IHAs are also supported by the Intent Handler 202, there are cases where new IHAs are needed supporting capabilities which are not available from existing Intent Handler Agents.

An Intent Owner 201 conveys an Intent Description 205 to the Intent Hander over a standardized interface. For example, for the case of 3GPP networks, see reference [1].

Inside the Intent Handler 202 an Agent Handler Function (AgHF) 204 resides which is responsible for the following operations:
- The Intent Owner 201 can describe in the Intent description 205 whether a specific IHA is to be used or the Intent Handler 201 is able to select automatically the appropriate IHAs by coordinating with the AgHF 204.
- Based on the Intent Description 205 the Intent Handler 201 understands which tasks need to be performed and is asking the AgHF 204 for the appropriate IHA to manage a specific task.
- The AgHF 204 is analysing the capabilities needed by an IHA to perform specific operations based on the translation made by the Intent Handler 201 of the (high-level) Intent description 205. For example, if the Intent description 205 is about network maintenance an IHA is needed to analyse the relationship between the different components to be upgraded and investigate for potential impact due to maintenance actions on these components. The Intent Hander 201 will ask the AgHF 204 which IHA to use to perform the components relationship analysis.
- The AgHF 204 is checking internally of available IHAs and selects the appropriate IHA supporting the capabilities needed (e.g., need for an IHA used to perform predictions for the load of a NF (network function) or the need for an IHA used to evaluate and select appropriate actions)
- In case there are no available IHAs to process a task, the AgHF 204 interacts with an Agent Management Function (AgMF) 203 over an ahf-amf interface 206 to query for available IHAs, fetch one or more appropriate IHA(s) and register the IHA(s) to a repository. After the new IHA(s) are available, they can be used to perform the intended operations.

An AgHF 205 can interact with multiple AgMFs 206 to search for available IHAs, while also an AgMF 205 can interact with multiple AgHFs 206 to provide IHAs.

An AgHF 205 and an AgMF 206 can coexist in the same Intent Handler device (e.g. using the same hardware) or can be decoupled. In that case where the AgMF 206 is external to the Intent handler 202 (as in the example of figure 2, e.g. on separate hardware), AgMF services can be accessed by the AgHF 205, for example, via an API exposed by the AgHF 205.

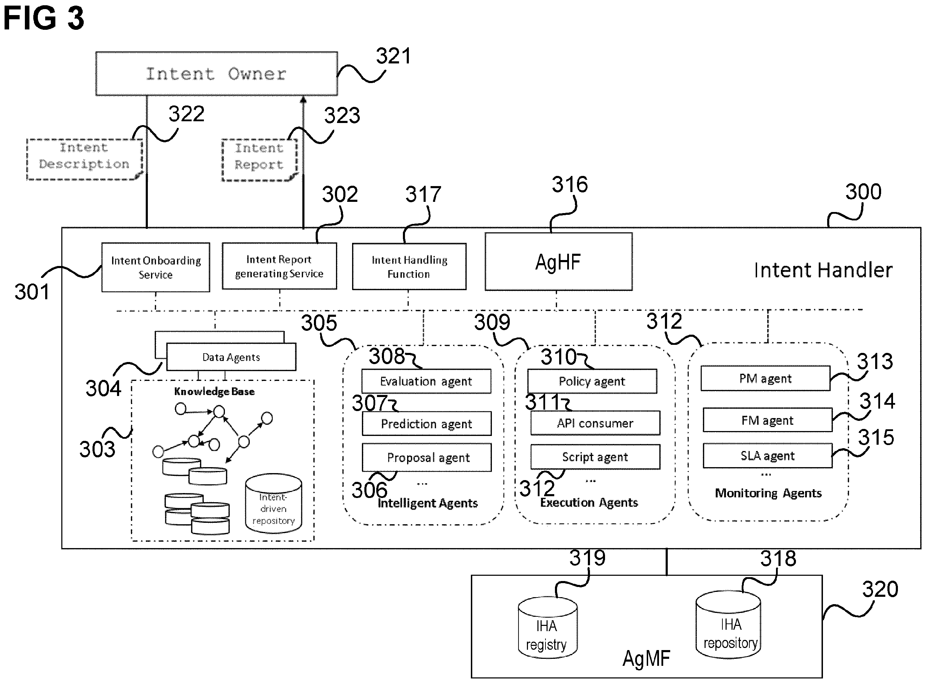

Figure 3 shows an intent handler 300 comprising an AgHF (Agent Handler Function) 316 in more detail.

As described with reference to figure 2, the intent handler 300 is coupled to an AgMF 310 which comprises an IHA registry 318 and an IHA repository 318. The intent handler 300 receives an intent description 322, handles the intent described by the intent description and sends a corresponding intent report 323 back to the intent owner.

For this, the intent handler 300 comprises an intent onboarding function 301 (providing an intent onboarding service for receiving an intent), an intent report generating function 302 (providing an intent reporting service), a knowledge base 303 and, as one or more intent handler agents, one or more data agents 304 and one or more intelligent agents 305 including for example a proposal agent 306, an evaluation agent 307 and a prediction agent 308.

The knowledge base 303 is a pool of data (e.g. at least partially determined by inference, possibly ML (machine learning)-based) that is used by the intent handler 300 and its components.

Each data agent 304 is a software that collects and writes data from managed entities to respective databases in the knowledge base 303.

Intelligent agents 305 (which are also software tools) carry out operations related to analysis and decision making, e.g.
- proposal agents 306 propose an action or multiple actions (for handling an intent)
- prediction agents 307 predict the outcome of proposed actions
- evaluation agents 308 evaluate the predictions and decide whether the outcomes are desired.

As further intent handler agents, the intent handler 300 comprises execution agents 309 which include tools, libraries, API consumers etc. used to execute actions selected by (other) intent handler agents of the intent handler, in particular the intelligent agents 305 (e.g., configure a virtual network function (VNF), update a network component etc.). The execution agents 309 for example include a policy agent 310, an API consumer 311 and a script agent 312.

Further, the intent handler 300 comprises monitoring agents 312 (as intent handler agents). These include tools, libraries, API consumers etc used to collect measurements, logs, SLA (Service Level Agreement) KPIs (Key Performance Indicators) etc.

The monitoring agents 312 for example include a PM agent 313, an FM agent 314 and an SLA agent 315.

An intent handling function 317 uses the services offered by the various components of the intent handler 300, in particular the IHA agents 304, 305, 309, 312 for handling a received intent (i.e. an intent for which an intent description 322 was received by the intent handler 303). It receives the intent description 322 from the intent onboarding service 301, parses it and triggers the various IHAs 304, 305, 309, 312 to perform functions for handling the intent (e.g. the proposal agents 305 to propose actions and the prediction agents 307 to predict their outcome, the evaluation agents 308 to evaluate the outcome and, if the outcome's evaluation shows that the actions should be performed for handling the intent, trigger the execution agents 309 to perform the actions). When the intent handling function 317 determines that an intent cannot be handled with the IHAs implemented by the intent handler 300 or currently instantiated in the intent handler 300, it may use the services offered by the AgHF 316 (as a respective service consumer) to find and instantiate suitable IHAs for handling the intent which in turn uses the services of the AgMF 320.

So, the Intent Handler 300 receives an intent, decides which actions need be taken to optimally fulfil (i.e. handle) the intent (by means of management tasks) and calls the appropriate Intent Handler Agent (IHAs) controlled by the AgHF 316 to execute the management tasks.

The knowledge base 303 for example contains an intent ontology which implies a general underlying vocabulary that is specific to the intent. The intent ontology according to the TM Forum (TMF) is based on the resource description format (RDF) and related specification (RDFS). The knowledge base information can be used by the Intent Handler 300 and the Intent Handler Agents (IHAs) 304, 305. The Intent Handler 300 may also have machine-reasoning capabilities to facilitate knowledge-driven decision-making processes. Translation of intent to specific tasks can be performed by the Handler or can be delegated to one or more Intent Handler Agents (IHAs) 304, 305, 309, 312.

In practice, functionalities provided by the Intent Handlers 304, 305, 309, 312 are about performing actions such as evaluation, prediction, action proposal taken, or procedures such as an Intent feasibility check, Intent exploration or Intent negotiation during pre-evaluation. However, specific solutions may not always fit for a specific use-case due to the lack of knowledge of operational environment (i.e. mobile network operator specifics). Further, this typically results in Intent Handler operations that are hidden from the Intent owner 321.

In view of the above, according to various embodiments, a mechanism to allow additional tools and mechanisms to extend the functionalities provided by an Intent Handler by considering (e.g. third party and/or external) components, herein denoted as Intent Handler Agents (IHAs), and configuring them to enable them to cooperate (i.e. (seamlessly) work with each other and other components of the Intent Handler) in order to handle an intent is provided.

IHAs can use AI-based techniques, e.g. machine learning models trained for the respective tasks such as proposing actions from the specification of an intent and predicting an outcome of an action.

For intent-based management based on 3GPP SA5 intent management model, according to various embodiments, attributes for an Intent IoC (Information Object Class) to support external agents/ functions to handle intents are introduced. For example, the following attributes are extended, defined and added, respectively, with respect to the Intent IoC of reference [1]
- New context attributes can be added to the generic Intent IOC as defined in reference [1] in order to indicate the support of an external agent and/or function, for example, "externalAgentSupportRequirement" which can refer to the use of external functions/agents to be leveraged. If True, it can be supported by the DN (Distinguished Name) of the agent if known. If the "extemalAgentSupportRequirement" is True, then Agent Handler Function (AgHF) can interact with Agent Management Function (AgMF) via ahf-amf interface.

In order to support query and discovery of the agents registered in the AgMF 320, a new Agent Capability Managed Object Instance (MOI) is introduced according to an embodiment. The Agent Capability MOI includes "agentDn" attribute which describes the DN of the agent and "agentCapabilityList" attribute which describes the list of expectation object information, and expectation target information, the supported state of intent lifecycle management procedure (for example but not limited to, fulfilment, negotiation, exploration, feasibility check etc.), the role (for example but not limited to, proposal, prediction, evaluation, execution etc.)

In some embodiments, the AgHF 316, based on the submitted intent, queries available agents from AgMF 320 if "externalAgentSupportRequirement" is True in the received intent IoC. In this case, the AgHF 316 sends the AgentCapabilityMOI to AgMF via ahf-amf interface, filling the expectation object information, and expectation target information, the supported state of intent lifecycle based on the received Intent IoC. If "extemalAgentSupportRequirement" attribute is supported with DN of the agent, then the AgHF 316 receives the MOI of the agent of given DN. The MOI can also include any relevant information (i.e. exposures, APIS etc) which can be populated by the AgMF upon processing the query.

The AgHF 316 monitors all the intents onboarded by Intent Onboarding function 301 and registered in the knowledge base 303 and handles leveraging the agents registered in the Intent Handler. If the received intent's attribute of "extemalAgentSupportRequirement" is True, then the AgHF 316 is responsible for querying and discovering external IHAs. In some embodiments, if the received intent's attribute of
"extemalAgentSupportRequirement" is False, then the AgHF 316 discovers available agents that are registered in the knowledge base 303 and leverages them for handling the received intent.

In some embodiments, the AgHF 316 is responsible for requesting connection with external IHAs and exchange data between the knowledge base 303 and external IHAs. When the intent is fulfilled, the Intent Handler 300 sends an Intent Report IOC which is defined in [1] to the intent owner via the Intent Report Generating Function 302. The Intent Report Generating Function 303 also checks the knowledge base 303 and reports the use of external agents/functions to the intent owner. For this, new attributes can be added to the Intent Report IOC such as new attributes to report the use of external agents/functions which can be a data type and include specific information regarding the agent/functions to be leveraged. For example, externalAgentDN, can be used to report the external agents that were used during handling the Intent. A new attribute such as externalIntentHandlerDN can be used to report which external intent handler functions, for example the external agents belong to, are used to handle the intent. New attributes can also be added to provide more information, regarding the expectation that the external agents are used to handle, their role in intent handling, etc. The granularity of the report can be selected by the Intent Owner 321 during Intent Report configuration.

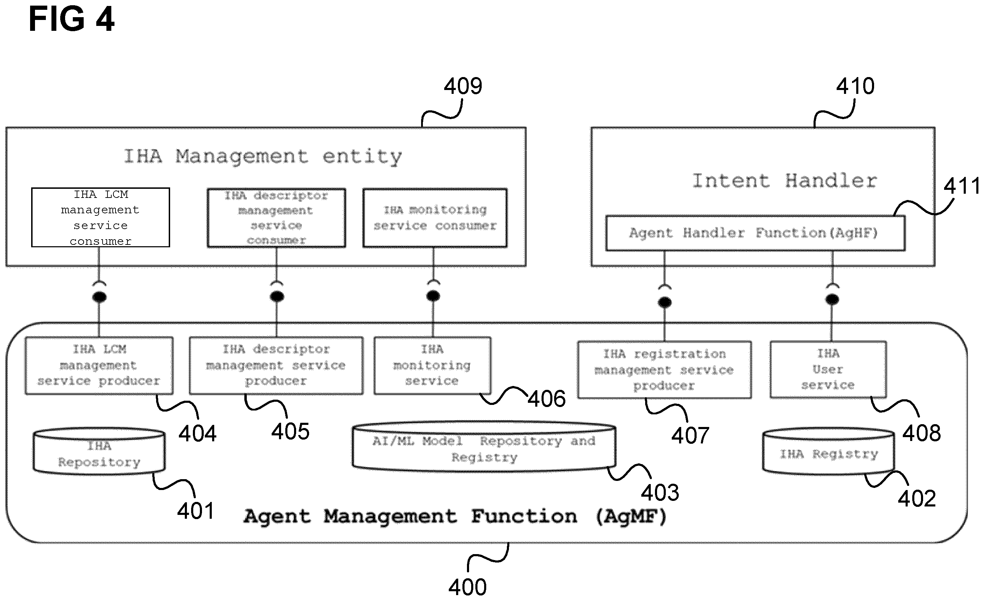

Figure 4 shows an (Intent Handler) Agent Management Function (AgMF) 400 according to an embodiment in more detail.

The Agent Management Function (AgMF) 400 is responsible for the management of IHAs.

The AgMF 400 can provide services to multiple consumers (only one is shown in figure 4 for illustration). Functionalities provided by the AgMF 400 include one or more of the following. The AgMF 400
- performs IHA Package (IHAP) and IHA descriptor (IHAD) management (e.g., onboarding, storing to IHA repository the relevant info etc.)
- Registers associations with multiple intent handler AgMFs. A single IHA instance can be used by multiple AgHFs.
- allows discovery of IHAs by the Intent Handler AgMFs.
- allows LCM (life cycle management) of IHAs
- makes resource allocation for the IHAs
- creates the IHAs
- configures the IHAs
- instantiate the service of IHAs
- terminates IHAs and releases IHA resources
- performs IHA data management, i.e. configures the endpoints and how data are transferred to and from the IHAs
- allows Fault Management (FM)/ Performance Management (PM) of IHAs.
- allows onboarding and discovery of AI (artificial intelligence) models (in particular machine learning (ML) models) used by IHAs, i.e. onboarding of AI models at intent handler agents
- allows LCM of the AI models used by the IHA and/or
- ensures seamless working among the various agents (in particular the IHAs).

Further, according to various embodiments, an IHA repository 401 to store information about IHAs can be queried by the AgMF 400. In case an IHA is accessed by an AgHF 411 of an intent handler 410, an IHA registry 402 is used to register IHAs instantiated in or for the AgHF 411, by the AgMF 400.

Further, an AI repository 403 to store information about AI models for IHAs is used to register AI models leveraged by the IHAs used by the AgHF 411. The AgHF 411 can determine which AI models are used by the IHA via IHA registration management service producer 407, which can be reported back to the Intent Owner 321.

AgHF 411 and AgMF 400 can coexist in the same Intent Handler (e.g. in the same device, using the same hardware) or can be decoupled. In that case, where the AgMF 400 is external to the AgMF 411 (e.g. on separate hardware) AgMF 400 services are accessed by the AgHF 416 via an exposed interface.

The AgMF 400 exposes an a) IHA management interface and b) interfaces towards AgHFs regarding the use of IHAs. An AgHFs can be also a consumer of the IHA management interface.

The IHA management interface allows management of the IHAs and/or the repositories by AgMF function consumers. The IHA management interface provides one or more of the following example functionalities to consumers like the AgMF 411 or an IHA management entity 409:
- Agent LCM management service 404
- instantiate a service of an IHA (i.e. provide an IHA user service 408)
- terminate an IHA
- scale (e.g. scaling in and out) an existing IHA
- subscription management for notifications about lifecycle events of an IHA (i.e. allow subscribing and terminating subscriptions)
- notification of subscribers (to the notification service) about events related to an IHA.
- Intent Handler Agent Package (IHAP) management service
- Intent Handler Agent Descriptor (IHAD) management service 405
- Intent Handler Agent registration management service 407
- Intent Handler Agent monitoring service 406
- IHA capabilities query

No restriction are imposed on the deployment form of each IHA. An IHA can be realized as a VNF deployed on VMs or containers, as new object type (e.g., a software deamon), as a Network Function (NF) etc.). In any case, the AgMF is responsible for the management of the IHA.

An IHA instance can be used by multiple AgMFs. For each task to execute, the AgHF is searching for the appropriate IHA to use, based on required capabilities, through the managing AgMFs . Based on the MOI that is shared by the AgMF which includes all information and description of an IHA, the AgHF understands whether the capabilities requested can be supported. If the AgMF has an available IHA that can satisfy the requirements, the AgHF requests the instantiation of a new IHA or can use an existing IHA running instance. In both cases AgMF performs IHA registry management to keep the corresponding association (e.g., AgHF#1 is using IHA#5). The information is stored in the IHA registry 402.

The AgMF 400 can expose to an AgHF 411 all the relevant information needed in the MOI so the AgHF 411 can use the IHA (e.g., endpoints information like IP address, API version, configuration files location etc.) by exposing an IHA Usage Interface , denoted as ahf-amf interface.

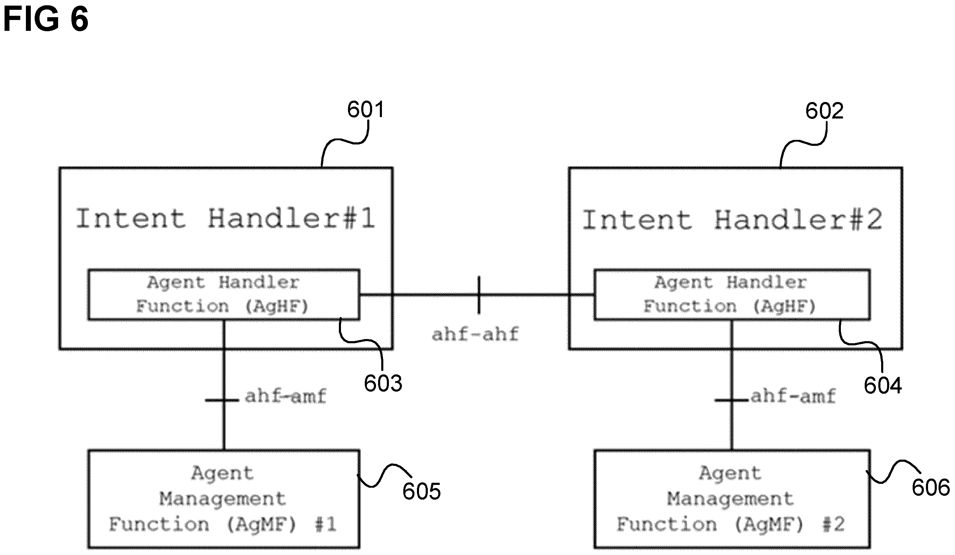

The ahf-amf interface (see figure 2 and also figure 6) is covering both IHA Management (sub-) Interface and IHA Usage (sub-) Interface exposed by the AgMF.

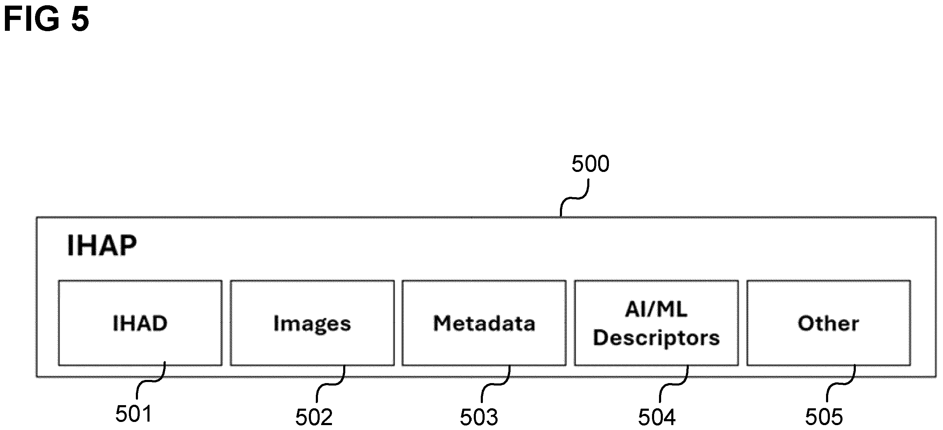

Figure 5 shows an Intent Handling Agent Package (IHAP) 500 according to an embodiment.

The IHAP 500 can include one or more IHAD files 501 (including an IHAD) and zero or more additional files such as image files 502, metadata files 503, AI/ML descriptors 504 or other 505 for further information about the IHA.

In case, the IHA described by the IHAP 500 requires an AI (e.g. ML) model, one of the following options may be used.
- (AI model specified in the IHAD): Information elements related to AI modelling are included in the IHAD. Full specifications of the AI models or pointers to specifications of the models stored in the (local or remote) AI model repository can be used.
- (AI model specified in the IHAP (separately from the IHAD)): To onboard the AI models for their use by IHAs, specifications of the AI models can in such a case be included in additional descriptor files in the IHA Package 500. Again, full specifications of the AI models or pointers to specifications of the models stored in the (local or remote) AI model repository can be used.

Due to the different means and possibilities of deployment and the specific characteristics of IHAs, the IHAD contains the following main parts of information:
- Information about deployment and lifecycle management of the IHA, for example but not limited to, scaling etc.
- Description of the characteristics, requirements and capabilities of IHA capabilities
   ∘ Description of IHA (e.g., in the form of metadata, which may also be included separately in a metadata file 503) including e.g., type, scope, implementation descriptions, reference to software modules inside IHAP etc.
   ∘ Description of IHA capabilities
   ∘ Description of IHA deployment type
   ∘ Description of IHA requirements (e.g. need for acceleration support)
   ∘ Description of IHA deployment flavours (e.g. edge computing)

In addition to IHAD, the IHAP may contain any images and any related information such as the following:
- Metadata: the IHA metadata refers to the structured data that describes the characteristics, requirements, and deployment details of an IHA. The IHA metadata is important for enabling automation (i.e. automation of deployment processes), interoperability (i.e. it may adhere to any future standardization), lifecycle management (i.e. seamless management of IHAs throughout their lifecycles)
- AI/ML descriptors: the IHAP 500 may contain AI/ML descriptors which refer to configuration files that describe the characteristics, model type, requirements and deployment details of AI/MI, that is leveraged within the IHA. The AI/ML descriptors may contain sub-descriptors for Model description, Training description, inference description, monitoring and metrics description, security and compliance description, lifecycle management description.
- Other: furthermore, an IHAP can include monitoring and management scripts of an IHA, test and validation files, any documentation related to the IHA, security information and any auxiliary files.

Figure 6 illustrates an Intent Handling delegation mode for a case where an Intent cannot be processed by a first intent handler 601 (Intent Handler #1). The intent may then be delegated to a second intent handler 602 (Intent Handler#2). This delegation can be enabled by the Agent Handler Functions (AgHF) 603 of the first intent handler 601. When an intent is submitted to Intent Handler#1, the Intent may seem to be relevant to the intent handler 601 as it is exposed by Intent handling capabilities, however its AgHF 603 can decide, for any reason, that it cannot complete the processing of the intent with the current setting. In this case, the AgHF 603 of Intent Handler #1 can query the required agent through its own AgMF 605 and if no relevant agent is found, then the AgHF 603 can delegate it to the intent handler 602 (Intent Handler#2) through an ahf-ahf interface by querying for the required IHA with an Agent Capability MOI. The AgHF 604 of the second intent handler 602 receives the required Agent Capability MOI and queries its own AgMF 606 with it. If an IHA is found (having the required capability), the AgHF 604 of the second intent handler 602 responds back to the AgHF 602 of Intent Handler #1 with a complete Agent Capability MOI of the relevant IHA, which includes all required information for the IHA to be leveraged by Intent Handler #1.

In this case, the ahf-ahf interface includes an IHA Usage Interface, similar to the one that is exposed by the AgMF. The AgHF 604 of Intent Handler #2 can expose to the AgHF 603 of Intent Handler #1 all the relevant information needed in the MOI so the AgHF 603 of Intent Handler #1 can use the IHA (e.g., endpoints information like IP address, API version, configuration files location etc.).

In some embodiments, new attributes can be added in Intent IOC to indicate a need for support of another intent handler, for example an attribute "externalIntentHandlerSupportRequirement" can refer to use of preferred intent handlers to handle a specific intent. If True, it can be supported by the DN (Distinguished Name) of the intent handler if known. Then, the Agent Handler Function (AgHF) can interact with Agent Handler Function (AgHF) of a specific intent handler via ahf-ahf interface. Furthermore, a new attribute such as externalIntentHandlerDN can be used to report which external intent handler functions, for example the external agents belong to, are used to handle the intent.

In some embodiments, the IHA can run internally in Intent Handler #2 and produces data, and the end data can be provided in the MOI to Intent Handler #1 instead of providing consumer information such as IP address, API version etc. In case an external agent and/or intent handling function is used, it is reported back to the intent owner in the Intent Report IOC.

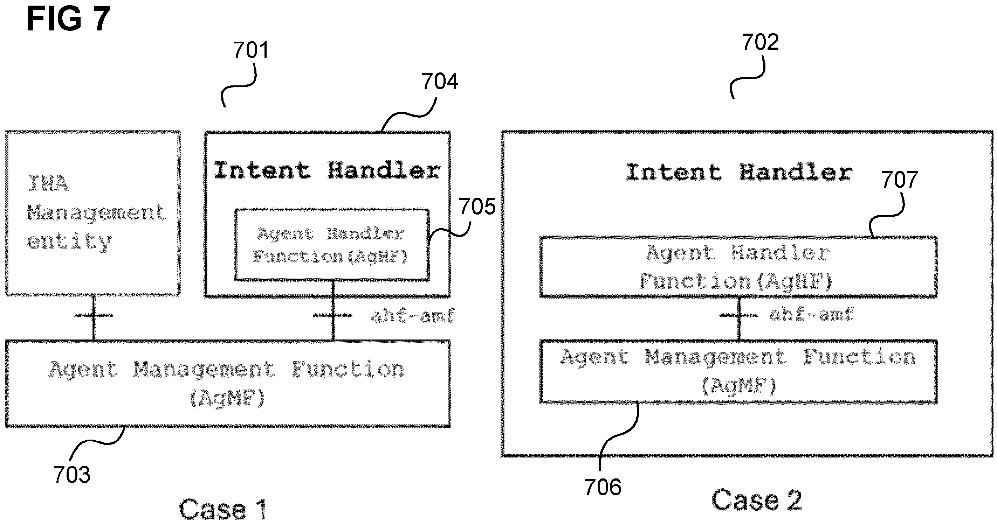

Figure 7 depicts different deployment scenarios for the AgMF.

In the first case (left diagram 701), the AgMF 703 is external to the Intent Handler 704 and communication between AgHF 705 and the AgMF 703 is facilitated through the ahf-amf interface which can be realized as remote API.

In the second case (right diagram 702), the AgMF 706 is an internal component of the Intent Handler 707. The AgMF 706 can locally take IHA management decisions, while relevant information related to the IHA management (i.e. MOI) can be part of the Intent Handler Knowledge base, accessible by the AgHF 707.

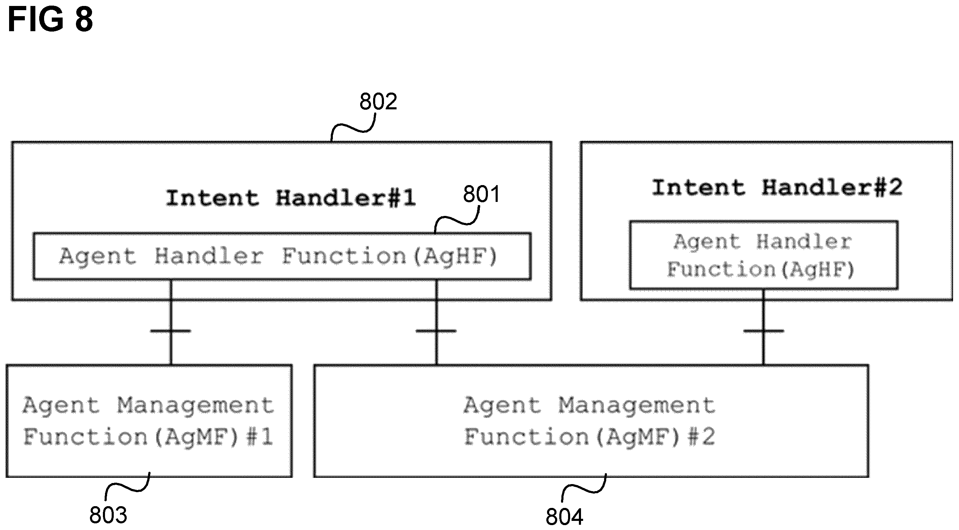

Figure 8 depicts different possible deployment scenarios.

A single AgHF can exploit services offered by multiple AgMFs regarding the use of IHAs. For example, the AgHF 801 residing in a first intent handler 802 (Intent Handler #1) can use IHAs managed by a first AgMF 803 (AgMF#1) and IHAs managed by a second AgMF 804 (AgMF#2).

A single AgMF can provide services to multiple AgHFs. The IHAs associated with an AgHF can be dedicated to this AgHF or shared with multiple AgHFs. In the case of IHA sharing between different AgHFs to avoid conflicts a single management entity, for example, IHA Management Entity 409 is responsible for the management of the shared IHA.

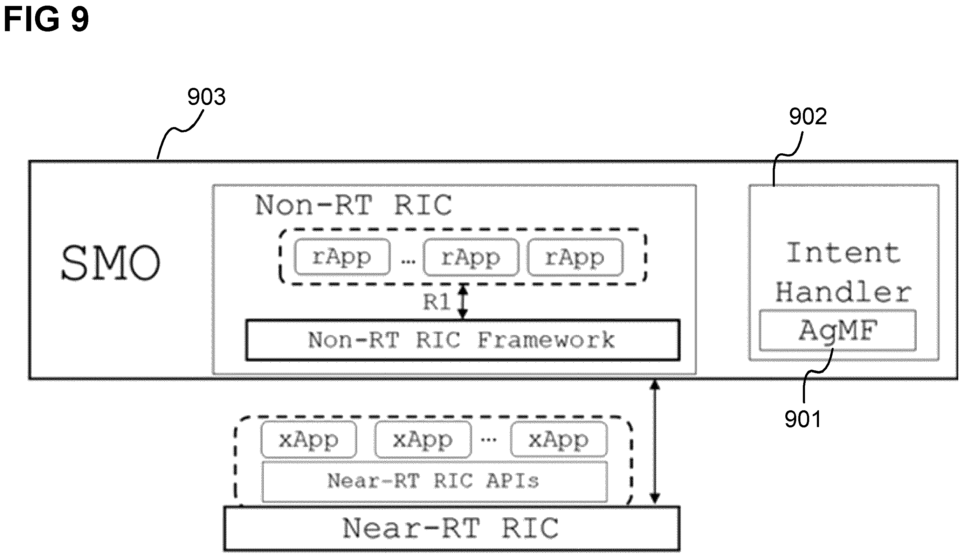

Figure 9 depicts an embodiment where an AgMF 901 is part of an intent handler 902 deployed within O-RAN Service Management and Orchestration (SMO) 903. In this embodiment, the AgMF 901 is part of the Intent Handler 902, similar to case 2 of figure 7. The AgMF 901 can locally take management decisions, while relevant information can be part of the Intent Handler knowledge base. In case that there are multiple intent handlers as part of O-RAN SMO 903, the communication between intent handlers can be realized as depicted in figure 6.

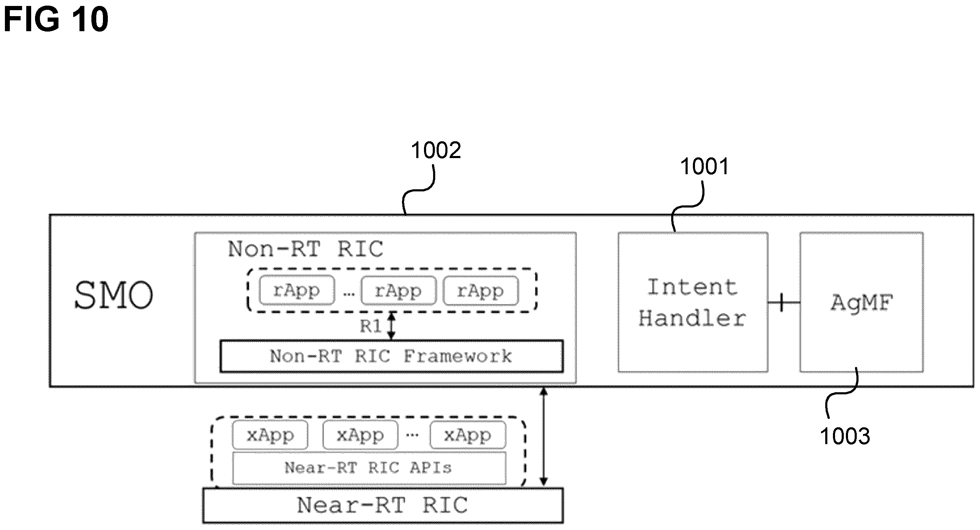

Figure 10 depicts an embodiment in O-RAN Architecture, where an intent handler 1001 is part of the SMO 1002, and the AgMF 1003 is a separate entity with which the intent handler 1001 interacts through an ahf-amf interface.

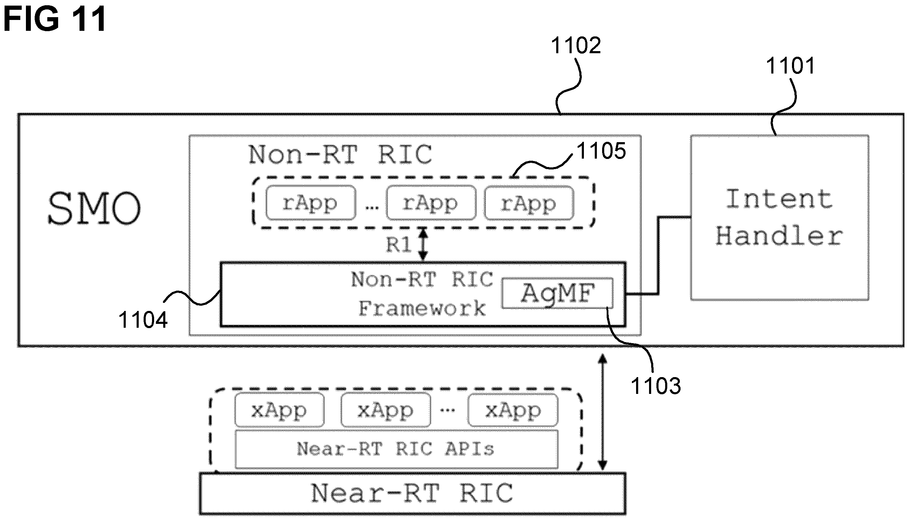

Figure 11 depicts an embodiment where the intent handler 1101 is part of the SMO 1102 and the AgMF 1103 is part of the Non-RT RIC (Non-Real Time RAN intelligent controller) 1104 where the IHAs can be deployed as rApps 1105. In this case the interaction between AgMF 1103 and the IHAs can be realized extending the R1 interface. The extension can be, for example, as follows:
- Approach 1: the rApp Registration Management Service can be extended to support Agent Capability MOI. For example, when the IHA is registered in the rApp registration service, the Agent Capability MOI is also provided. The AgMF can interact with rApp registration management to utilize rApps as IHAs.
- Approach 2: the Agent Capability MOI may include the following additional information in case the IHA is deployed as an rApp: rApp name, the role of rApp (Service Producer, service consumer) and security credentials

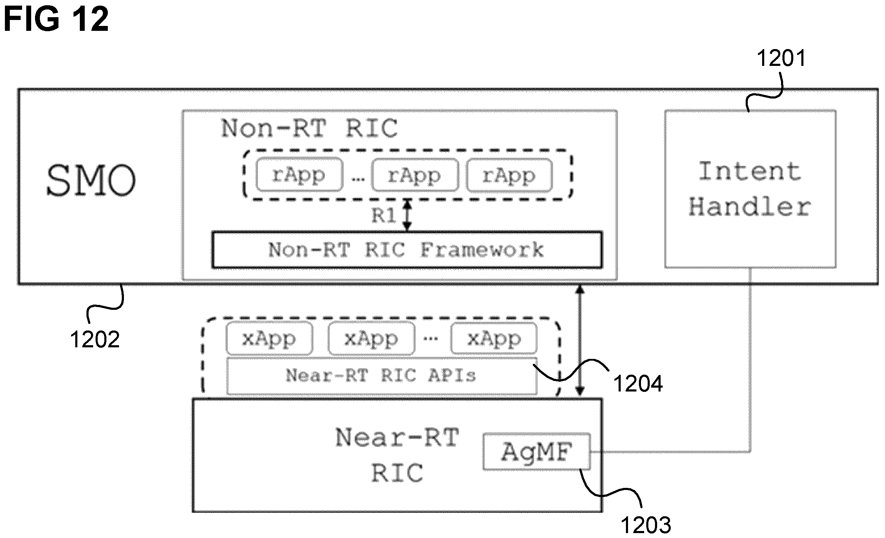

Figure 12 depicts an embodiment where the Intent Handler 1201 is deployed as part of O-RAN SMO 1202 but an AgMF 1203 is deployed in Near-RT RIC 1204 as the IHAs that are managed by the AgMF 1203 can be deployed as xApps. In this embodiment, the interaction between AgMF 1203 and the IHAs can be realized extending the A1 interface.

The extension can be, for example, as follows:
- Approach 1: the existing O1 interface can be extended to support the Agent Capability MOI, so that the AgHF of the intent handler can query via the O1 interface.
- Approach 2: a separate Ahf-Amf interface can be leveraged between the intent handler and the AgMF and defined within the O-RAN architecture.

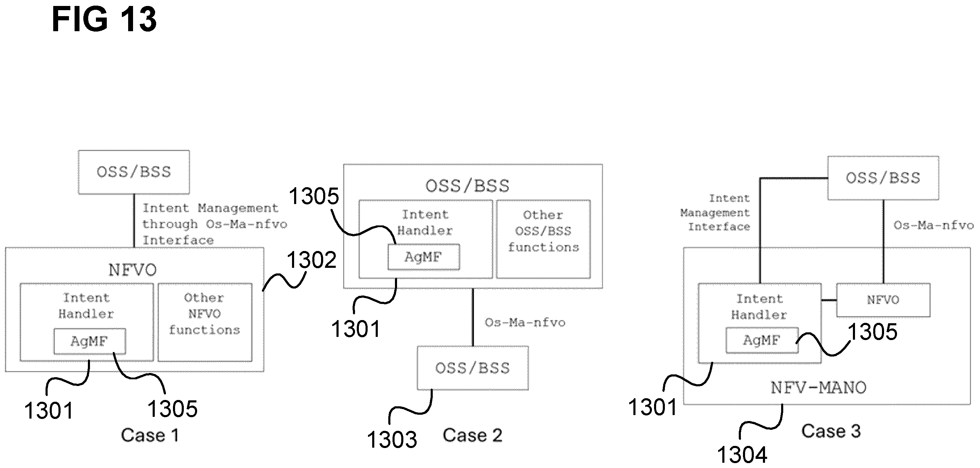

Figure 13 illustrates how an Intent Handler 1301 including an AgMF 1305 (and, as described above, an AgHF) arranged in an ETSI (European Telecommunications Standards Institute) NFV (Network Function Virtualization) architecture.

The Intent Handler 1301 may perform intent management as part of an NFVO (NFV Orchestrator) 1302, or as part an OSSBSS (Operations Support System and Business Support System) 1303 or as an additional function in NFV-MANO (Management and Orchestration) 1304.

An IHA can be realized as a VNF (virtual network function)-generic OAM function or other PaaS (Platform as a Service). In that case management of the LCM of the IHA can be achieved by exploiting NFV-MANO services through interaction between the AgMF 1305 and NFV-MANO.

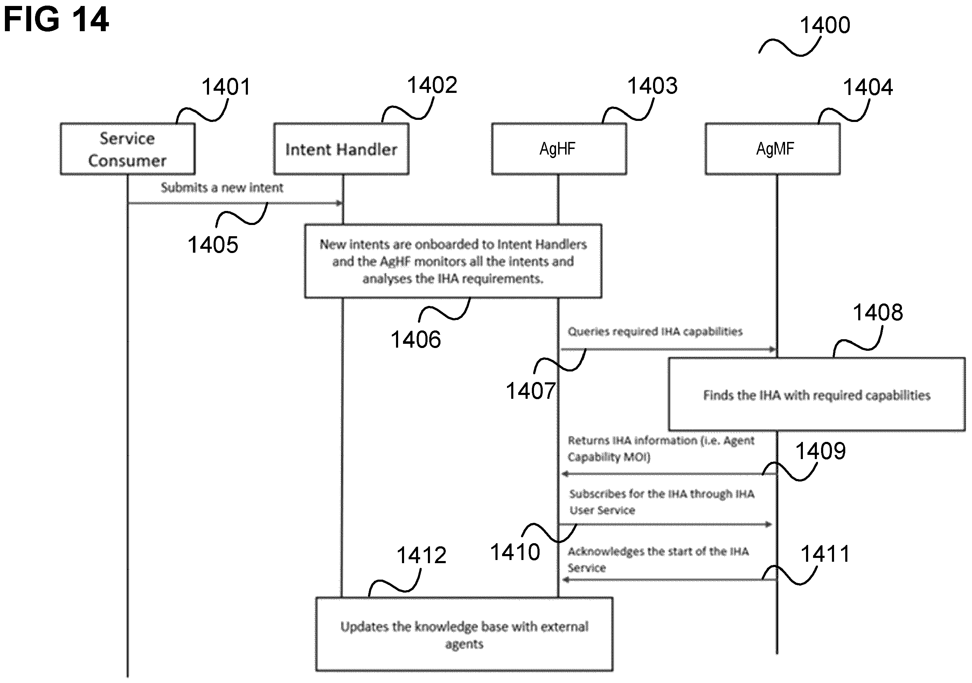

Figure 14 shows a Sequence Diagram 1400 for Querying and Using External IHAs.

A service consumer 1401 (acting as intent owner), an intent handler 1402, an AgHF 1403 (of the intent handler 1402) and an AgMF 1404 (connected to the intent handler 1402) are involved in the flow.

The process starts in 1405 with the service consumer 1401 submitting a new intent to the Intent Handler 1402. The Intent handler 1402 onboards the intent and the AgHF 1402 monitors all new submitted intents and analyses the IHA requirements in 1406. Based on the IHA requirements, the in AgHF queries the required IHA capabilities from the AgMF 1404 in 1407. The AgMF in 1404 in 1408 finds the IHAs with required capabilities and returns the IHA information (i.e. Agent Capability MOI) to the AgHF in 1403 in 1409. In 1410 the AgHF in 1403 then subscribes for the IHA through the IHA User Service offered by the AgMF in 1404. In 1411 the AgMF in 1404 acknowledges the start of the service and the Intent Handler 1402 in 1412 starts getting data from the requested IHA and populates its knowledge base to process the intent.

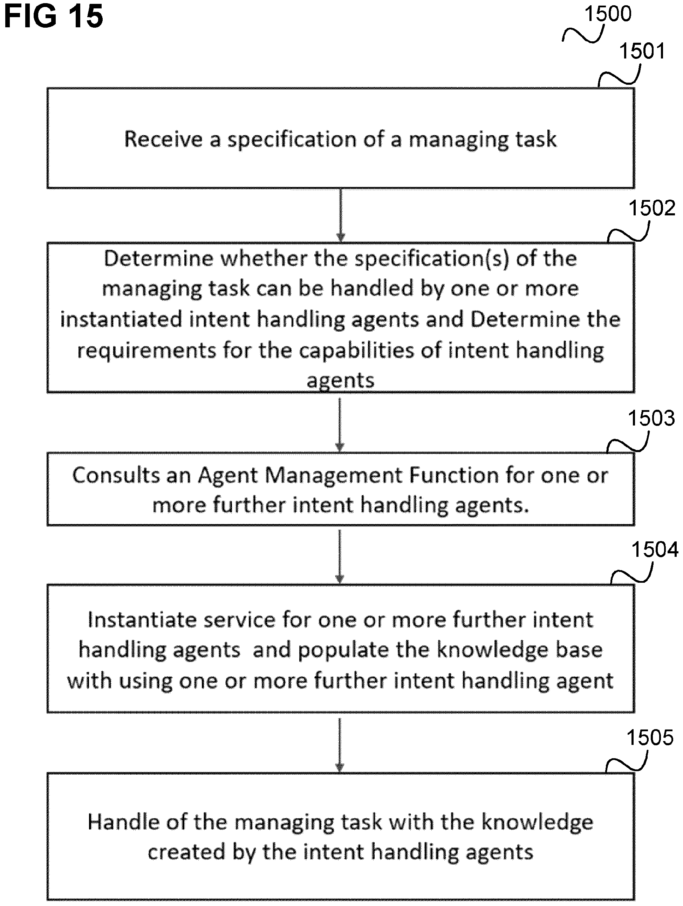

Figure 15 shows a flow diagram 1500 illustrating a (computer-implemented) method for handling a managing task (corresponding to the intent in the embodiments described above) of a communication network (i.e. in the communication network, i.e. related to the communication network, i.e. one or more components of the communication network should be managed).

In 1501, a specification of a managing task is received. The managing task has been decided by the Intent handler based on the Intent specification which includes requirements, including goals and/or constraints.

In 1502, it is determined whether the Intent managing task can be performed by one or more instantiated Intent handling agents and determine the requirements for the capabilities for intent handling agents.

In 1503, in reaction to a determination that the Intent managing task cannot be performed by the one or more instantiated Intent handling agents, it consults to repository and a service of managing Intent handling agents is consulted (e.g. queried) for one or more further Intent handling agents which, when instantiated the service, allow receiving knowledge for handling the Intent managing task together with the one or more instantiated Intent handling agents. Descriptions (or "specifications", i.e. in particular information about the Intent handler agent capabilities like also how to instantiate and use them) of the one or more further Intent handling agents are retrieved from the repository and the responsible management function.

In 1504, the one or more further Intent handling agents are instantiated for service.

In 1505, the managing task is handled by the knowledge created by one or more further Intent handling agents and the (instances of the) one or more Intent handling agents. According to various embodiments, the managing task handling agents are for example software tools. Accordingly, the specifications of the one or more further managing task handling agents may include the program code of the one or more further managing task handling agents.

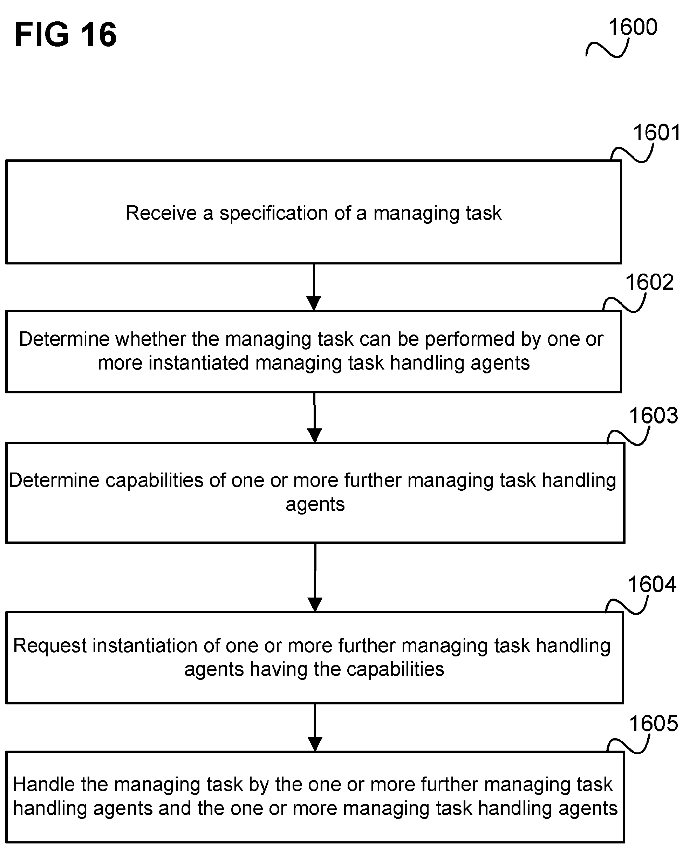

In summary, according to various embodiments, a method is provided as illustrated in figure 16.

Figure 16 shows a flow diagram 1600 illustrating method for handling a managing task of a communication network.

In 1601, a specification of a managing task is received, wherein the specification includes requirements, including goals and/or constraints, of the managing task.

In 1602, it is determined whether the managing task can be performed by one or more instantiated managing task handling agents.

In reaction to a determination that the managing task cannot be performed by the one or more instantiated managing task handling agents:
- In 1603, required capabilities of one or more further managing task handling agents which, when instantiated, allow handling the managing task together with the one or more instantiated managing task handling agents are determined (such that the requirements are fulfilled, i.e. which allow handling the managing task together with the one or more instantiated managing task handling agents in a manner that the requirements are fulfilled).
- In 1604, an Agent Management Function (i.e. a network component (i.e. a component of the communication network) configured to manage managing task handling agents, including their life-cycle management (i.e. in particular instantiating them, registering instantiated agents, terminating them) is requested to instantiate one or more further managing task handling agents having the required capabilities. In other words, a first entity (e.g. an Intent Handler) does the orchestration but requests another entity (e.g. an Agent Management Function), e.g. implemented on a separate computing device, to perform the lifecycle management).
- In 1605, the managing task is handled by the one or more further instantiated managing task handling agents and the one or more instantiated managing task handling agents. For example, the one or more further instantiated managing task handling agents and the one or more instantiated managing task handling agents generate information which are used to handle the intent. Accordingly, the capabilities may include one or more capabilities to generate information needed to handle the managing task.

The method is for example performed by a component of the communication network (e.g. an intent handler as in the examples above).

The components of the component performing the method (e.g. a receiver (or input interface), one or more determines, a transmitter (or output interface) for transmitting the request, a memory etc.) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A method for handling a managing task of a communication network, comprising:
receiving a specification of a managing task, wherein the specification includes requirements, including goals and/or constraints, of the managing task;
determining whether the managing task can be performed by one or more instantiated managing task handling agents;
In reaction to a determination that the managing task cannot be performed by the one or more instantiated managing task handling agents,
determining required capabilities of one or more further managing task handling agents which, when instantiated, allow handling the managing task together with the one or more instantiated managing task handling agents;
requesting an agent management function to instantiate one or more further managing task handling agents having the required capabilities; and
handling the managing task by the one or more further instantiated managing task handling agents and the one or more instantiated managing task handling agents.

2. The method of claim 1, wherein the one or more instantiated managing task handling agents and/or the one or more further managing task handling agents include at least one proposal managing task handling agent configured to propose at least one managing action for handling the managing task, at least one prediction managing task handling agent configured to predict an outcome of the at least one managing action and at least one evaluation managing task handling agent configured to evaluate the predicted outcome.

3. The method of claim 2, comprising determining that the managing task cannot be performed by the one or more instantiated managing task handling agents in reaction to a determination that the one or more instantiated managing task handling agents do not include any one of the at least one proposal managing task handling agent, the at least one prediction managing task handling agent and the at least one evaluation managing task handling agent.

4. The method of claim 2 or 3, comprising determining one or more managing actions for handling the managing task based on the evaluation of the predicted outcome by a managing task handling function.

5. The method of any one of claims 1 to 4, wherein the one or more instantiated managing task handling agents and/or the one or more further managing task handling agents are configured to determine one or more managing actions for handling the managing task and wherein the one or more instantiated managing task handling agents and/or the one or more further managing task handling agents include at least one managing agent execution agent configured to perform the determined one or more managing actions.

6. The method of claim 5, comprising determining that the managing task cannot be performed by the one or more instantiated managing task handling agents in reaction to a determination that the one or more instantiated managing task handling agents do not include the at least one execution agent.

7. The method of any one of claims 1 to 6, wherein the one or more instantiated managing task handling agents and/or the one or more further managing task handling agents include at least one monitoring agent for monitoring how the managing task is performed.

8. The method of claim 7, comprising determining that the managing task cannot be performed by the one or more instantiated managing task handling agents in reaction to a determination that the one or more instantiated managing task handling agents do not include the at least one monitoring agent.

9. The method of any one of claims 1 to 8, wherein the managing task is a maintenance task, a service delivery task, a service assurance task, a network optimization task and/or an energy saving task.

10. The method of any one of claims 1 to 9, comprising maintaining, by the Agent Management Function, a registry of managing task handling agents the Agent Management Function has initiated in reaction to a request for instantiation of managing task handling agents.

11. The method of claim 10, comprising receiving, by the Agent Management Function, for each of one or more additional managing task handling agents, a description of the additional managing task handling agent, and adding the description of the additional managing task handling agent to a repository which the Agent Management Function uses to instantiate the one or more further managing task handling agents.

12. The method of any one of claims 1 to 11, comprising determining, from the specification of the managing task, a set of required managing task handling agents required to handle the managing task and determining whether the managing task can be performed by the one or more instantiated managing task handling agents by comparing the set of required managing task handling agents with the one or more instantiated managing task handling agents.

13. The method of any one of claims 1 to 12, comprising determining one or more artificial intelligence models from an artificial intelligence model suitable for usage and/or needed by at least one of the one or more of instantiated managing task handling agents and/or the one or more of additional managing task handling agents for handling the managing task, retrieving a specification of the one or more artificial intelligence models, implementing the one or more artificial intelligence models and handling the managing task using the one or more artificial intelligence models.

14. The method of any one of claims 1 to 13, further comprising transmitting a report to a sender of the specification of a managing task, wherein the report includes the information whether one or more further instantiated managing task handling agents were instantiated to handle the managing task.

15. A communication network managing component, configured to perform the method of any one of claims 1 to 14.
